# FASCICULE DE BREVET EUROPEEN

(11) **EP 2 793 544 B1**
(45) Date de publication et mention de la délivrance du brevet: **14.09.2016**
(21) Numéro de dépôt: 12810396.7
(22) Date de dépôt: 18.12.2012
(51) Int. Cl.: A01B 63/22

(54) **MACHINE AGRICOLE AVEC UN SUIVI DE TERRAIN AMELIORE POUR LES ORGANES DE TRAVAIL**
LANDWIRTSCHAFSMASCHINE MIT VERBESSERTEN BODENANPASSUNG FÜR DIE ARBEITSWERKZEUGE
AGRICULTURAL MACHINE WITH IMPROVED TERRAIN FOLLOWING FOR THE WORKING TOOLS

(30) Priorité: 21.12.2011 FR 1162116
(43) Date de publication de la demande: 29.10.2014
(73) Titulaire: KUHN S.A., 67700 Saverne (FR)
(72) Inventeur: AUDIGIE, Jean-Charles, F-67330 Bouxwiller (FR); LAPLANCHE, Cédric, F-67700 Saverne (FR)
(74) Mandataire: Esch, Esther Evelyne
(86) Numéro de dépôt international: PCT/FR2012/052962
(87) Numéro de publication internationale: WO 2013/093318

(56) Documents cités:
- FR-A1- 2 909 514
- US-A1- 2010 122 648
- US-B1- 7 640 877

## Description

La présente invention se rapporte au domaine technique général du machinisme agricole. L'invention concerne une machine agricole pour travailler le sol ou pour semer des graines avec un châssis traîné et des organes de travail répartis sur une barre longitudinale en plusieurs sections, ladite barre longitudinale présente au moins deux poutres primaires s'étendant sensiblement transversalement à la direction d'avance dans une configuration de travail.

Dans le cas d'une machine d'ensemencement ou d'un semoir, les organes de travail reposent sur le sol avec une pression prédéterminée ou doivent travailler le sol à une profondeur déterminée pour assurer une bonne germination des graines et une levée homogène des plants. Dans le cas d'une machine de travail du sol ou de préparation d'un lit de semence, les organes de travail, sous forme de dents ou de disques, doivent travailler à une profondeur de travail déterminée.

Une telle machine pour semer des graines est représentée dans le document US 8 001 914 B2**.** Cette machine agricole présente un châssis traîné avec une barre longitudinale en deux sections. La barre longitudinale présente ainsi deux poutres primaires portant des organes de travail. Il s'agit d'un semoir monograine de grande largeur dont les organes de travail déposent les graines à une profondeur déterminée dans des sillons. Chaque poutre primaire est dirigée transversalement à la direction d'avance et est reliée au châssis via une articulation d'axe sensiblement horizontal et parallèle à la direction d'avance. L'extrémité libre de la poutre primaire repose sur le sol via une roue d'appui. Chaque section pivote vers le haut ou vers le bas autour de l'articulation d'axe horizontal en fonction de la surface palpée par la roue d'appui située à l'extrémité. Ainsi, seuls les organes de travail situés directement à proximité de la roue d'appui auront une position précise par rapport au sol respectant la profondeur de travail souhaitée. Les autres organes de travail, plus éloignés de la roue d'appui, suivront les ondulations du terrain de manière plutôt grossière et la profondeur d'implantation des graines ne sera pas homogène sur toute la longueur de la poutre primaire. On remarque de plus que la roue d'appui s'étend à l'avant de la poutre primaire alors que les organes de travail sont disposés à l'arrière. Cette distance entre la roue d'appui et les organes de travail, compte tenu de la direction d'avance, provoque également une perte de précision pour les organes de travail quant à leur suivi du terrain. Il en est de même pour les organes de travail disposés vers le centre, puisque les roues réalisant le contrôle de la profondeur sont éloignées des organes de travail car elles sont fixées à l'arrière du châssis.

La demande FR 2 909 514 décrit un porte-outils destiné à combiner des appareils agricoles.

La présente invention a pour but de remédier aux inconvénients précités et vise à proposer une machine agricole avec une meilleure adaptation au sol pour les organes de travail.

Conformément à l'invention, la machine agricole est caractérisée en ce qu'une poutre secondaire est liée à chaque poutre primaire au moyen de deux dispositifs à bielles, lesdites poutres secondaires supportent lesdits organes de travail et que chaque poutre secondaire repose sur le sol au moyen de deux roues d'appui et est susceptible de se déplacer librement durant le travail pour suivre le profil du terrain. Grâce à ces caractéristiques, chaque poutre secondaire avec ses organes de travail peut suivre fidèlement les ondulations du terrain. La liberté de mouvement des dispositifs à bielles permet ainsi aux organes de travail de réaliser un travail à une profondeur déterminée sur toute la longueur de la poutre secondaire. Chaque poutre secondaire est donc capable de suivre avec précision les ondulations du terrain et d'épouser le profil. La position de la poutre secondaire dans l'espace est indépendante de celle du châssis. Lors du travail, la poutre secondaire s'étend sensiblement parallèlement à la surface du sol.

D'autres caractéristiques et avantages de l'invention se dégageront de la description qui suit en regard des dessins annexés qui ne sont donnés qu'à titre d'exemples non limitatifs de l'invention. Sur ces dessins :
- la **figure 1** est une vue en perspective d'une machine agricole selon l'invention, dans une configuration de travail,
- la **figure 2** est une vue arrière d'une section de barre de la machine agricole au travail sur un terrain en dévers gauche,
- la **figure 3** est une vue arrière d'une section de barre de la machine agricole au travail sur un terrain en dévers droit,
- la **figure 4** représente une vue de côté dans une position de travail,
- la **figure 5** représente une vue de côté dans une autre position de travail.

La machine agricole (1) pour travailler le sol ou pour semer des graines selon l'invention comporte un châssis (2) traîné et des organes de travail (3) répartis sur une barre longitudinale (4) en plusieurs sections ce qui permet à la machine agricole (1) d'intervenir sur une large bande de travail. La barre longitudinale (4) présente au moins deux poutres primaires (4a, 4b). Les poutres primaires (4a, 4b) s'étendent sensiblement transversalement à la direction d'avance (A) dans une configuration de travail. Les poutres primaires (4a, 4b) s'étendent dans le prolongement les unes des autres, elles sont sensiblement alignées compte tenu de la direction d'avance (A).

Le châssis (2) est réalisé sous la forme d'un cadre longitudinal (5) équipé à l'avant d'un système d'attelage (6) destiné à être accroché à l'attelage d'un tracteur (non représenté) et à l'arrière d'un chariot (7). Le tracteur est amené à déplacer et à animer la machine agricole (1) suivant une direction d'avance indiquée par la flèche (A). L'invention concerne ainsi une machine agricole traînée dont le châssis (2) repose sur le sol via les roues (8) du chariot (7). Afin de s'adapter aux différents travaux à réaliser, la hauteur du châssis (2) est réglable par rapport au chariot (7) au moyen d'au moins un actionneur (9). Dans l'exemple représenté, l'actionneur (9) est réalisé sous la forme d'un vérin, composé d'un cylindre et d'un piston, qui se déplace dans un sens ou dans l'autre sous l'action d'un fluide. L'actionneur (9) est de préférence un vérin du type à double effet. D'une manière avantageuse, deux actionneurs (9) s'étendent entre le chariot (7) et le châssis (2). Ces actionneurs (9) ont pour fonction de soulever ou d'abaisser le châssis (2) de la machine agricole (1).

Selon une importante caractéristique de l'invention, la machine agricole (1) comporte une poutre secondaire (10a, 10b) liée à chaque poutre primaire (4a, 4b) au moyen de deux dispositifs à bielles (11), les poutres secondaires (10a, 10b) supportent les organes de travail (3) et chaque poutre secondaire (10a, 10b) repose sur le sol au moyen de deux roues d'appui (12) et est susceptible de se déplacer librement durant le travail pour suivre le profil du terrain. De cette manière, tous les organes de travail (3) peuvent suivre fidèlement les ondulations du terrain et ainsi assurer une profondeur de travail uniforme sur toute la longueur de la poutre secondaire (10a, 10b). La liberté de mouvement des dispositifs à bielles (11) permet à la poutre secondaire (10a, 10b) de suivre avec précision les ondulations du terrain et d'épouser le profil du sol durant le travail. La poutre secondaire (10a, 10b) s'adapte et suit parfaitement le sol lors du travail, sa position est sensiblement parallèle à la surface du sol. Sa position dans l'espace est indépendante de celle de la barre longitudinale (4) et notamment de la poutre primaire (4a, 4b) correspondante. De préférence, chaque poutre secondaire (10a, 10b) est sensiblement parallèle à la poutre primaire (4a, 4b) correspondante.

Selon une autre caractéristique, un dispositif à bielles (11) est disposé sensiblement au voisinage de chaque extrémité de poutre secondaire (10a, 10b). Un dispositif à bielles (11) s'étend de part et d'autre du plan médian de la poutre secondaire (10a, 10b). De préférence, au moins une roue d'appui (12) est associée à chaque dispositif à bielles (11). Ainsi, chaque poutre secondaire (10a, 10b) repose sur le sol avec au moins deux roues d'appui (12). Chaque roue d'appui (12) a d'une part pour fonction de s'appuyer sur le sol et de suivre le terrain et d'autre part d'assurer la fonction de régulation de la profondeur de travail pour les organes de travail (3). Les organes de travail (3) sont fixés sur les poutres secondaires (10a, 10b) de manière régulière avec des écartements constants. Ils sont répartis symétriquement par rapport au plan vertical médian de la machine agricole (1).

De manière avantageuse, une roue d'appui (12) est disposée au voisinage de chaque extrémité de poutre secondaire (10a, 10b). Cette position des roues d'appui (12) vers les extrémités de poutre secondaire (10a, 10b) apporte de la stabilité. La roue d'appui (12) est, de préférence, disposée entre un dispositif à bielles (11) et l'extrémité de la poutre secondaire (10a, 10b) la plus proche. Les roues d'appui (12) s'étendent de part et d'autre des deux dispositifs à bielles (11). Avec des points d'appui ou surfaces d'appui sur le sol réalisés par les roues d'appui (12) écartées, le suivi du terrain et donc l'orientation de la poutre secondaire (10a, 10b) est plus fidèle aux ondulations du terrain. De préférence, les roues d'appui (12) sont éloignées du plan vertical médian de la poutre secondaire (10a, 10b) respective.

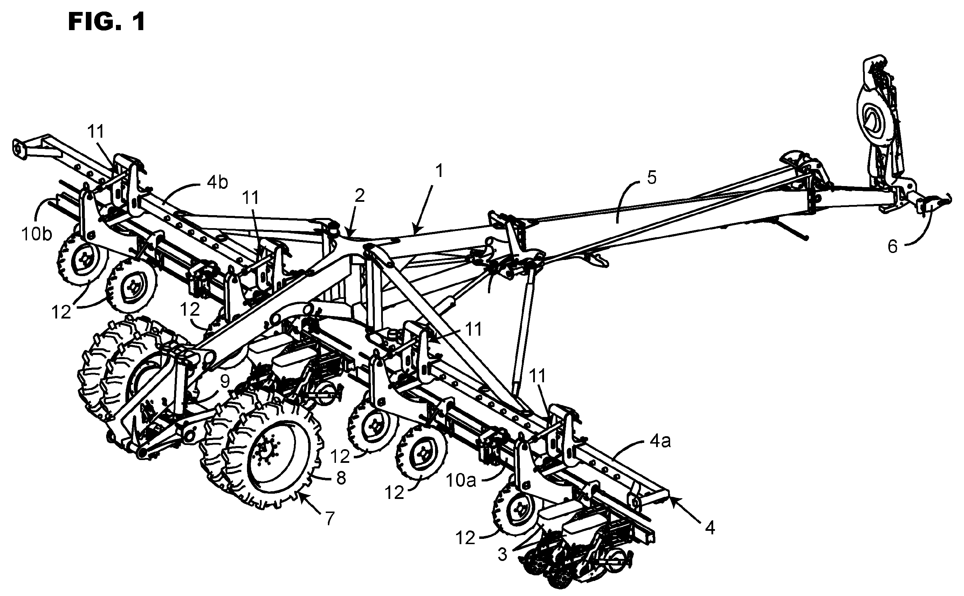

La figure 1 représente une machine agricole (1) selon l'invention dans une configuration de travail avec uniquement deux organes de travail (3). Les organes de travail (3) sont fixés à l'arrière des poutres secondaires (10a, 10b). Les poutres primaires (4a, 4b) et les poutres secondaires (10a, 10b) s'étendent transversalement à la direction d'avance (A). Les deux poutres secondaires (10a, 10b) sont disposées de manière alignées l'une par rapport à l'autre compte tenu de la direction d'avance (A). Dans une alternative non représentée, les poutres secondaires (10a, 10b) sont disposées de manière décalées dans la direction d'avance (A). La machine agricole (1) représentée à la figure 1 est une machine pour semer des graines. La description qui suivra se rapportera à un semoir de précision ou semoir monograine. Les organes de travail (3) sont des organes destinés à distribuer les graines une à une et à les implanter dans une ligne de semis à des écartements constants. L'organe de travail (3) est ainsi un élément semeur possédant une trémie, une distribution, des éléments d'enterrage et de contrôle de profondeur. L'élément semeur peut également comporter des éléments de rappuyage et/ou de recouvrement. Le montage de l'élément semeur sur la barre longitudinale se fait avec un parallélogramme déformable qui lui permet de se déplacer parallèlement au sol pour s'adapter individuellement aux bosses et aux creux du sol. Dans le cas d'un semoir ayant une trémie centrale, l'élément semeur ne possédera pas de trémie. Dans le cas d'un semoir en lignes, l'élément semeur ne possédera pas de trémie ni de distribution individuelle.

A la lumière de la figure 1, on remarque que deux roues d'appui (12) sont associées à un dispositif à bielles (11). Ainsi, chaque poutre secondaire (10a, 10b) repose sur le sol via quatre roues d'appui (12). Une roue d'appui (12) s'étend de part et d'autre de chaque dispositif à bielles (11). L'utilisation de plusieurs roues d'appui (12) permet une meilleure portance et un suivi de terrain plus fin.

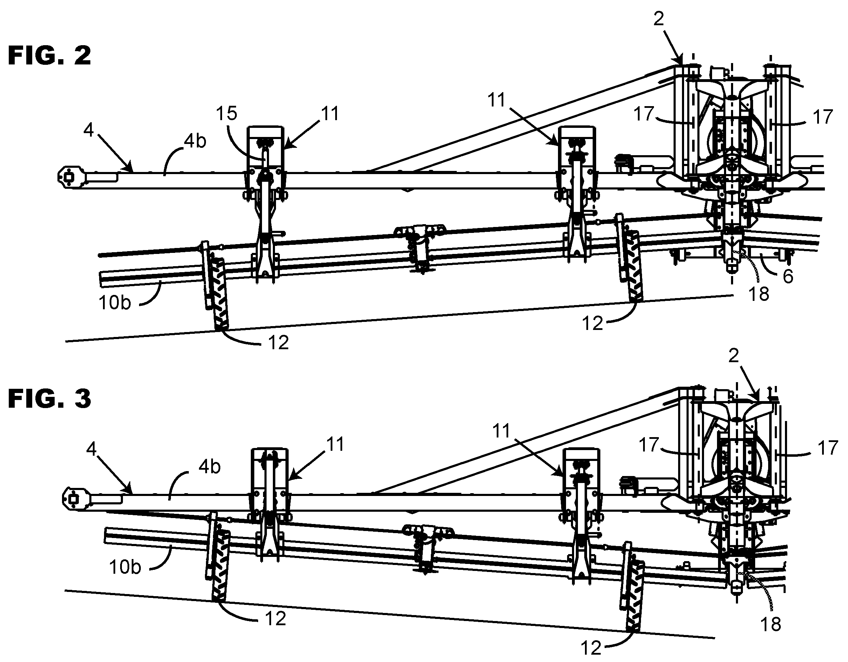

Les figures 2 et 3 représentent, selon une vue arrière, la partie gauche de la machine agricole (1) dans une configuration de travail sur un terrain en pente. Les organes de travail (3) n'ont pas été représentés sur ces figures. L'inclinaison du terrain de la figure 2 est un dévers gauche alors que l'inclinaison du terrain de la figure 3 est un dévers droit. La représentation des figures 2 et 3 montre, entre autres, la poutre primaire (4b) gauche et la poutre secondaire (10b) gauche. Sur cet exemple de réalisation, la poutre secondaire (10b) repose sur le sol seulement au moyen de deux roues d'appui (12). Une roue d'appui intérieure qui s'étend proche du plan médian (18) de la machine agricole (1) et une roue d'appui extérieure qui s'étend vers l'extrémité opposée. On peut constater sur ces figures que la liberté de mouvement des dispositifs à bielles (11) permet aux organes de travail (3) et à la poutre secondaire (10b) de suivre avec précision les ondulations du terrain en cours de travail. La partie droite de la machine agricole (1) est avantageusement le symétrique de la partie gauche.

D'une manière particulièrement avantageuse, la position des dispositifs à bielles (11) d'une poutre secondaire (10a, 10b) est indépendante car chaque dispositif à bielles (11) est flottant lors du travail. Les poutres secondaires (10a, 10b) ne sont donc pas contraintes à garder la même inclinaison ou position que la poutre primaire (4a, 4b) correspondante. Chaque extrémité de poutre secondaire (10a, 10b) bénéficie d'une liberté de mouvement vers le haut ou vers le bas et transversalement pour suivre le profil du sol. Cette mobilité permet un suivi de terrain fidèle et précis. L'effort d'avance du châssis (2) et notamment de la poutre primaire (4a, 4b) est transmis à la poutre secondaire (10a, 10b) via sa liaison au travers des dispositifs à bielles (11).

Sur les figures 2 et 3, on remarque que la poutre secondaire (10b) est inclinée alors que la poutre primaire (4b) est sensiblement horizontale. Les dispositifs à bielles (11) sont représentés dans deux positions extrêmes : une position haute et une position basse. Le dispositif à bielles (11) proche du plan vertical médian (18) de la machine agricole (1) de la figure 2 s'étend dans une position haute et l'autre s'étend dans une position basse. Grâce aux dispositifs à bielles (11), chaque poutre secondaire (10a, 10b) présente une amplitude de mouvement relativement élevée, de l'ordre de 8° vers le haut et de 8° vers le bas. La position des dispositifs à bielles (11) de la figure 3 est inversée par rapport à celle de la figure 2. Durant le travail, la poutre secondaire (10b) pourra prendre toutes les inclinaisons possibles dans la mesure où elles restent dans la plage entre la position haute et la position basse des dispositifs à bielles (11). Le centre de rotation de chaque poutre secondaire (10a, 10b) s'étend entre ses deux dispositifs à bielles (11). Dans la réalisation représentée, les dispositifs à bielles (11) s'étendent avantageusement, à chaque extrémité, dans la partie formant le tiers de la longueur de la poutre secondaire (10a, 10b).

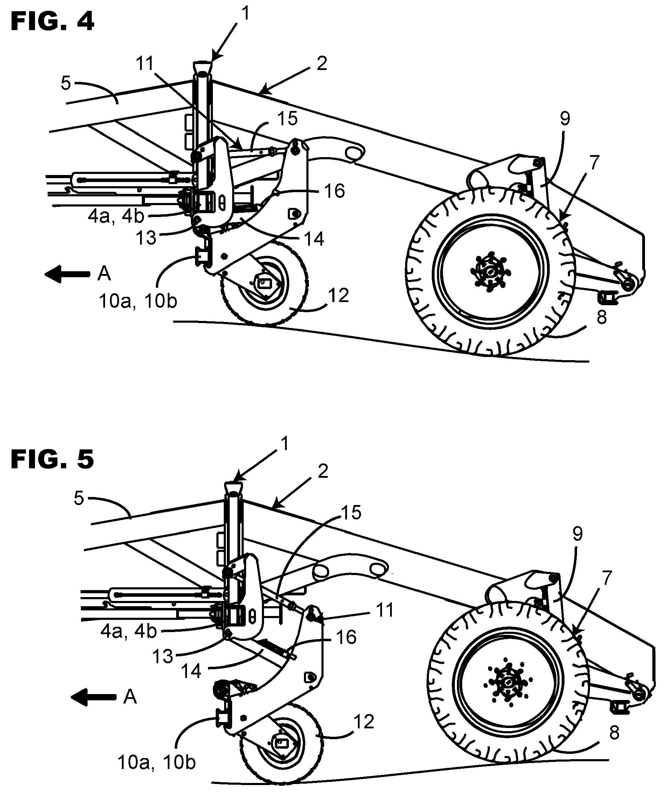

Les figures 4 et 5 illustrent une vue de côté de la partie arrière d'une machine agricole (1) selon l'invention dans une configuration de travail. La figure 4 représente un dispositif à bielles (11) dans une position haute et la figure 5 représente un dispositif à bielles (11) dans une position basse. Les organes de travail (3) ne sont pas représentés sur ces figures. Avantageusement, la partie de poutre secondaire (10a, 10b) contenue dans le plan vertical passant par le dispositif à bielles (11) est susceptible de se déplacer selon un mouvement plan. Ce mouvement se fait par rapport à la poutre primaire (4a, 4b) correspondante grâce aux dispositifs à bielles (11). Un tel mouvement permet aux organes de travail (3) de rester sensiblement parallèle à la surface du sol. La poutre secondaire (10a, 10b) s'étend sensiblement en-dessous de la poutre primaire (4a, 4b) de telle sorte que les poutres secondaires (10a, 10b) sont plus proches du sol que les poutres primaires (4a, 4b).

D'une manière avantageuse, chaque dispositif à bielles (11) présente quatre articulations dont l'une est une articulation pivot (13) d'axe horizontal et perpendiculaire à la direction d'avance (A). Ces quatre articulations forment ensemble sensiblement un quadrilatère. Le quadrilatère est de préférence un parallélogramme autorisant un déplacement vertical et sensiblement parallèle au sol à la poutre secondaire (10a, 10b). Le dispositif à bielles (11) comporte au moins une bielle inférieure (14) et au moins une bielle supérieure (15). L'articulation pivot (13) relie la poutre primaire (4a, 4b) à l'une des extrémités de la bielle inférieure (14). L'autre extrémité de la bielle inférieure (14) est reliée à la poutre secondaire (10a, 10b) via une articulation linéaire annulaire. Chaque bielle supérieure (15) présente à ses extrémités une articulation du type sphérique reliant d'une part la poutre primaire (4a, 4b) et d'autre part la poutre secondaire (10a, 10b). Grâce à ces différentes articulations, la mobilité de chaque poutre secondaire (10a, 10b) permet aux organes de travail (3) de s'adapter au sol de manière optimale.

Le suivi du terrain des organes de travail (3) est conditionné par la proximité entre les points d'appui et les organes de travail (3). Il est donc avantageux que les roues d'appui (12) se trouvent à proximité des organes de travail (3) pour que la profondeur de travail des organes de travail (3) soit sensiblement identique sur toute la longueur de la poutre secondaire (10a, 10b). D'une manière préférentielle, les roues d'appui (12) sont sensiblement alignées avec lesdits organes de travail (3) en vue de dessus compte tenu de la direction d'avance (A). Ainsi, les roues d'appui (12) s'étendent entre les organes de travail (3). Dans le cas d'un semoir, la surface d'appui au sol des roues d'appui (12) est sensiblement alignée avec les éléments d'enterrage. Etant donné que les organes de travail (3) sont juxtaposés aux roues d'appui (12), leur suivi de terrain est considérablement amélioré. Dans une alternative, les roues d'appui (12) peuvent être positionnées devant les poutres secondaires (10a, 10b).

Chaque dispositif à bielles (11) présente un système de butée (16) permettant de limiter le débattement vers le bas et notamment de contrôler la profondeur maximale de travail. Dans le cas d'organes destinés à implanter un produit dans le sol, on évite ainsi que les organes pénètrent trop profondément dans le sol lorsque le sol est meuble. La butée basse pourra être réglée en fonction des travaux à effectuer. Lors du transport et des demi-tours en fin de champ, il est prévu d'activer le système de butée (16) pour dégager les organes de travail (3) du sol. Ceci permet à la machine agricole (1) d'effectuer les manoeuvres avec une garde au sol augmentée sans détériorer les organes de travail (3).

Afin de respecter la législation routière pour la circulation sur les routes, la grande largeur de travail de la machine agricole (1) doit être réduite lors du transport. De ce fait, les poutres primaires (4a, 4b) sont repliées en pivotant autour d'une articulation (17) respective d'axe sensiblement vertical. Les poutres primaires (4a, 4b) se replient vers l'avant pour réduire la largeur de transport. Selon une alternative, les poutres primaires (4a, 4b) se replient vers l'arrière.

Dans le cas d'une machine agricole de travail du sol, les organes de travail (3) sont réalisés par des disques ou des dents.

Dans un exemple de réalisation non représenté, les deux poutres primaires (4a, 4b) peuvent être disposées de manière décalée l'une par rapport à l'autre compte tenu de la direction d'avance (A).

Selon une autre variante de réalisation de l'invention non représentée, la barre longitudinale (4) est constituée d'au moins trois sections.

Il est bien évident que l'invention n'est pas limitée aux modes de réalisation décrits ci-dessus et représentés sur les dessins annexés. Des modifications restent possibles dans la limite definie par les revendications suivantes.

## Revendications

1. Machine agricole (1) pour travailler le sol ou pour semer les graines avec un châssis (2) traîné et des organes de travail (3) répartis sur une barre longitudinale (4) en plusieurs sections, ladite barre longitudinale (4) présente au moins deux poutres primaires (4a, 4b) s'étendant sensiblement transversalement à la direction d'avance (A) dans une configuration de travail, machine dans laquelle une poutre secondaire (10a, 10b) est liée à chaque poutre primaire (4a, 4b) au moyen de deux dispositifs à bielles (11), dans laquelle lesdites poutres secondaires (10a, 10b) supportent lesdits organes de travail (3) et dans laquelle chaque poutre secondaire (10a, 10b) repose sur le sol au moyen de deux roues d'appui (12) et est susceptible de se déplacer librement durant le travail pour suivre le profil du terrain, ***caractérisée en ce que*** la position des dispositifs à bielles (11) d'une poutre secondaire (10a, 10b) est indépendante, chaque dispositif à bielles (11) étant flottant lors du travail.

2. Machine agricole selon la revendication 1, ***caractérisée en ce* qu'**un dispositif à bielles (11) est disposé au voisinage de chaque extrémité de poutre secondaire (10a, 10b).

3. Machine agricole selon la revendication 1 ou 2, ***caractérisée en ce* qu'**au moins une roue d'appui (12) est associée à chaque dispositif à bielles (11).

4. Machine agricole selon l'une quelconque des revendications 1 à 3, ***caractérisée en ce* qu'**une roue d'appui (12) est disposée entre chaque extrémité de poutre secondaire (10a, 10b) et l'un desdits dispositifs à bielles (11).

5. Machine agricole selon l'une quelconque des revendications 1 à 4, ***caractérisée en ce que*** dans la configuration de travail, le centre de rotation de chaque poutre secondaire (10a, 10b) s'étend entre lesdits deux dispositifs à bielles (11) correspondant.

6. Machine agricole selon l'une quelconque des revendications 1 à 5, ***caractérisée en ce que*** chaque dispositif à bielles (11) présente quatre articulations dont l'une est une articulation pivot d'axe horizontal et perpendiculaire à la direction d'avance (A).

7. Machine agricole selon l'une quelconque des revendications 1 à 6, ***caractérisée en ce que*** chaque dispositif à bielles (11) présente au moins une bielle inférieure (14) et au moins une bielle supérieure (15).

8. Machine agricole selon l'une quelconque des revendications 1 à 7, ***caractérisée en ce que*** chaque dispositif à bielles (11) présente un système de butée (16).

9. Machine agricole selon l'une quelconque des revendications 1 à 8, ***caractérisée en ce que*** lesdites roues d'appui (12) sont sensiblement alignées avec lesdits organes de travail (3) suivant une vue de dessus.

## Patentansprüche

1. Landwirtschaftliche Maschine (1) zur Bodenbearbeitung oder zur Aussaat von Samen mit einem Anhängerahmen (2) und Arbeitselementen (3), die auf einem aus mehreren Abschnitten gebildeten Längsbalken (4) verteilt sind, der Längsbalken (4) weist mindestens zwei Hauptbalken (4a, 4b) auf, die sich in einer Arbeitskonfiguration im Wesentlichen quer zur Vorschubrichtung (A) erstrecken, Maschine in welcher ein Nebenbalken (10a, 10b) mittels zwei mit Zwischengliedern versehenen Vorrichtungen (11) mit jedem Hauptbalken (4a, 4b) verbunden ist, in welcher die Nebenbalken (10a, 10b) die Arbeitselemente (3) tragen und in welcher jeder Nebenbalken (10a, 10b) mittels zwei Stützräder (12) auf dem Boden aufliegt und sich während der Arbeit frei bewegen kann um dem Bodenprofil zu folgen, ***dadurch gekennzeichnet,* dass** die Stellung der mit Zwischengliedern versehenen Vorrichtungen (11) eines Nebenbalkens (10a, 10b) unabhängig ist, wobei jede mit Zwischengliedern versehene Vorrichtung während der Arbeit schwebend ist.

2. Landwirtschaftliche Maschine nach Anspruch 1, ***dadurch gekennzeichnet,* dass** eine mit Zwischengliedern versehene Vorrichtung (11) in der Nähe jedes Ende von Nebenbalken (10a, 10b) angebracht ist.

3. Landwirtschaftliche Maschine nach Anspruch 1 oder 2, ***dadurch gekennzeichnet,* dass** mindestens ein Stützrad (12) jeder mit Zwischengliedern versehenen Vorrichtung (11) zugeteilt ist.

4. Landwirtschaftliche Maschine nach irgend einem der Ansprüche 1 bis 3, ***dadurch gekennzeichnet,* dass** ein Stützrad (12) zwischen jedem Ende von Nebenbalken (10a, 10b) und einer der mit Zwischengliedern versehenen Vorrichtungen (11) angebracht ist.

5. Landwirtschaftliche Maschine nach irgend einem der Ansprüche 1 bis 4, ***dadurch gekennzeichnet,* dass** sich in der Arbeitskonfiguration der Drehpunkt jedes Nebenbalkens (10a, 10b) zwischen den beiden entsprechenden mit Zwischengliedern versehenen Vorrichtungen (11) erstreckt.

6. Landwirtschaftliche Maschine nach irgend einem der Ansprüche 1 bis 5, ***dadurch gekennzeichnet,* dass** jede mit Zwischengliedern versehene Vorrichtung (11) vier Gelenke aufweist, von welchen eines ein Drehgelenk mit einer horizontalen und zur Vorschubrichtung (A) senkrechten Achse ist.

7. Landwirtschaftliche Maschine nach irgend einem der Ansprüche 1 bis 6, ***dadurch gekennzeichnet,* dass** jede mit Zwischengliedern versehene Vorrichtung (11) mindestens ein unteres Zwischenglied (14) und mindestens ein oberes Zwischenglied (15) aufweist.

8. Landwirtschaftliche Maschine nach irgend einem der Ansprüche 1 bis 7, ***dadurch gekennzeichnet,* dass** jede mit Zwischengliedern versehene Vorrichtung (11) ein Anschlagsystem (16) aufweist.

9. Landwirtschaftliche Maschine nach irgend einem der Ansprüche 1 bis 8, ***dadurch gekennzeichnet,* dass** in einer Draufsicht die Stützräder (12) im Wesentlichen mit den Arbeitselementen (3) in einer Reihe aufgestellt sind.

## Claims

1. Agricultural machine (1) for working the soil or for sowing seeds, with a trailed chassis (2) and work elements (3) distributed on a longitudinal bar (4) in several sections, the said longitudinal bar (4) has at least two primary beams (4a, 4b) extending substantially transversely to the direction of advance (A) in a work configuration, machine in which a secondary beam (10a, 10b) is connected to each primary beam (4a, 4b) by means of two connection devices (11), in which the said secondary beams (10a, 10b) support the said work elements (3), and in which each secondary beam (10a, 10b) rests on the soil by means of two support wheels (12) and is able to move freely during work to follow the profile of the terrain, ***characterized in* that** the position of the connection devices (11) of a secondary beam (10a, 10b) is independent, each connection device (11) being floating during work.

2. Agricultural machine according to Claim 1, ***characterized in* that** a connection device (11) is arranged in the vicinity of each end of secondary beam (10a, 10b).

3. Agricultural machine according to Claim 1 or 2, ***characterized in* that** at least one support wheel (12) is associated with each connection device (11).

4. Agricultural machine according to any one of Claims 1 to 3, ***characterized in* that** a support wheel (12) is arranged between each end of secondary beam (10a, 10b) and one of the said connection devices (11).

5. Agricultural machine according to any one of Claims 1 to 4, ***characterized in* that** in the work configuration, the centre of rotation of each secondary beam (10a, 10b) extends between the said corresponding two connection devices (11).

6. Agricultural machine according to any one of Claims 1 to 5, ***characterized in* that** each connection device (11) has four articulations, one of which is a pivot articulation with an axis which is horizontal and perpendicular to the direction of advance (A).

7. Agricultural machine according to any one of Claims 1 to 6, ***characterized in* that** each connection device (11) has at least one lower connecting-rod (14) and at least one upper connecting-rod (15).

8. Agricultural machine according to any one of Claims 1 to 7, ***characterized in* that** each connection device (11) has a stop system (16).

9. Agricultural machine according to any one of Claims 1 to 8, ***characterized in* that** the said support wheels (12) are substantially aligned with the said work elements (3) according to a top view.
